# EUROPEAN PATENT APPLICATION

(11) **EP 1 255 400 A2**
(43) Date of publication of application: **06.11.2002**
(21) Application number: 02076533.5
(22) Date of filing: 18.04.2002
(51) Int. Cl.: H04N 1/32

(54) **Forming a scrapbook page with images of different characteristics**

(30) Priority: 30.04.2001 US 845589
(71) Applicant: EASTMAN KODAK COMPANY, Rochester, New York 14650 (US)
(72) Inventor: McIntyre, Dale F., c/o Eastman Kodak Company, Rochester, New York 14650-2201 (US); Allen, Loretta E., c/o Eastman Kodak Company, Rochester, New York 14650-2201 (US)
(74) Representative: Parent, Yves

(57) **Abstract**

A method of arranging a series of at least two visual images of different characteristics of the same image and fixing them to a page which is usable in a scrapbook, includes using a digital image to produce a series of digital images of different characteristics; forming visual images of the series of different characteristics of images on a medium; cutting out the series of different characteristics of visual images from the medium; and fixing the cut out different visual images on the page which can be used in a scrapbook.

## Description

The present invention relates to forming a scrapbook page or a portion of a scrapbook page, which can be inserted into a scrapbook.

A scrapbook is a collection of scrapbook pages, each of which is a unique collection of at least photographs, paper crafts and journaling. In general, each scrapbook page or a group of pages are based on a theme, and all of the components that make up that page(s) are in context with the theme. For instance, a scrapbook page having a "Holiday" theme would comprise photographs taken during that holiday and paper crafts depicting the holiday, for instance a Christmas tree cut out of green construction paper or a purchased die cut. In addition, the person making the scrapbook page would record information about the holiday, and including who was shown in the pictures on the page in the form of journaling. All of the components of a scrapbook page are arranged in an aesthetically pleasing manner which best depicts the essence of the theme. The components are typically glued in place, and the assembled scrapbook page is inserted into a scrapbook. A purpose of making a scrapbook vs. simply putting pictures in a photo album is to create a unique, personalized family heirloom which tells a story and will be cherished for a lifetime, and perhaps passed on to the next generation. The task of creating a personalized scrapbook provides benefit to those participating in this craft as well as the recipient of the completed scrapbook.

Novice scrapbookers will often look to others for inspiration when organizing a new page layout, and experienced scrapbooker will share their scrapbook page layouts for creative inspiration, and because they are a source of pride for the creator. Many scrapbook magazines show themed page layouts with a description on how to assemble a page, and the materials needed to get the desired results.

The scrapbook business has grown over the past several years. Today there are scrapbook specialty stores, magazines devoted to the craft, and a plurality of websites offering on-line merchandise sales and creative tips. The type of merchandise available in this market segment has grown substantially. Today, a person can purchase scrapbook specialty items including scissors to cut a variety of patterns, pre-printed patterned paper and paper in all colors of the rainbow, rubber stamps, stickers, templates, stencils, die cuts, specialty pens and markers, specialty adhesives, and die punches to name a few. On the other hand, the type of still photograph included in a scrapbook has gone relatively unchanged over 100 years.

With the advent of digital imaging, still photographs can take on a whole new look. Even if the original picture was captured with an analog camera, the picture can be scanned to create a digital copy of the original photograph. Once a picture is in digital form, using digital editing techniques a person can create distinctive looking composite photographs comprising images having different characteristics. The avid scrapbooker is continually looking for new ways to make a scrapbook page layout, the latest technique to try, or a new product to try in their scrapbook. However, most of the present methods used by scrapbookers are fairly complex and use only a single image of the same scene.

It is therefore an object of the present invention to provide visual images of different characteristics taken from a single digital image.

This object is achieved by a method of arranging a series of at least two visual images of different characteristics of the same image and fixing them to a page, which is usable in a scrapbook, comprising the steps of:
a) using a digital image to produce a series of digital images of different characteristics;
b) forming visual images of the series of different characteristics of images on a medium;
c) cutting out the series of different characteristics of visual images from the medium; and
d) fixing the cut out different visual images on the page, which can be used in a scrapbook.

It is an advantage of the present invention that users of scrapbooks can provide a single digital image and receive a series of visual images having different characteristics such as size and color from such supplied digital image and fixing them to a scrapbook page to provide a more esthetically pleasing scrapbook page. Distinctive images which have a special appeal to a scrapbooker can be used to form images with different characteristics of the distinctive images thereby allowing the scrapbooker to use his/her creativity to create a scrapbook page of distinction.

It is a further advantage of the invention to provide a simple method, which permits a user to supply a visual image and receive a single page composite image product that includes multiple visual images derived from the supplied visual image.
FIG. 1A depicts a composite image product, which provides information including text and images to a scrapbooker to practice the present invention;
FIG. 1B depicts another embodiment of a composite image product, which provides information including text and images to a scrapbooker to practice the present invention;
FIG. 1C depicts yet another embodiment of a composite image product which provides information including text and images to a scrapbooker to practice the present invention;
FIG. 2 depicts in block diagram form a process, which can be used by a scrapbooker to practice the present invention;
FIG. 3 is similar to FIG. 2 but depicts another process, which can be used in accordance with the present invention;
FIG. 4 is a schematic showing the use of the Internet as a channel in the practice of the present invention;
FIG. 5 depicts a picture or visual image making apparatus often referred to as a kiosk which can be used in making images for use in the present invention;
FIG. 6 depicts in block diagram form the various functions that are found in the picture or visual image making apparatus shown in FIG. 5; and
FIG. 7 depicts a scrapbook page created from the composite image product of FIG. 1A and the method of the present invention.

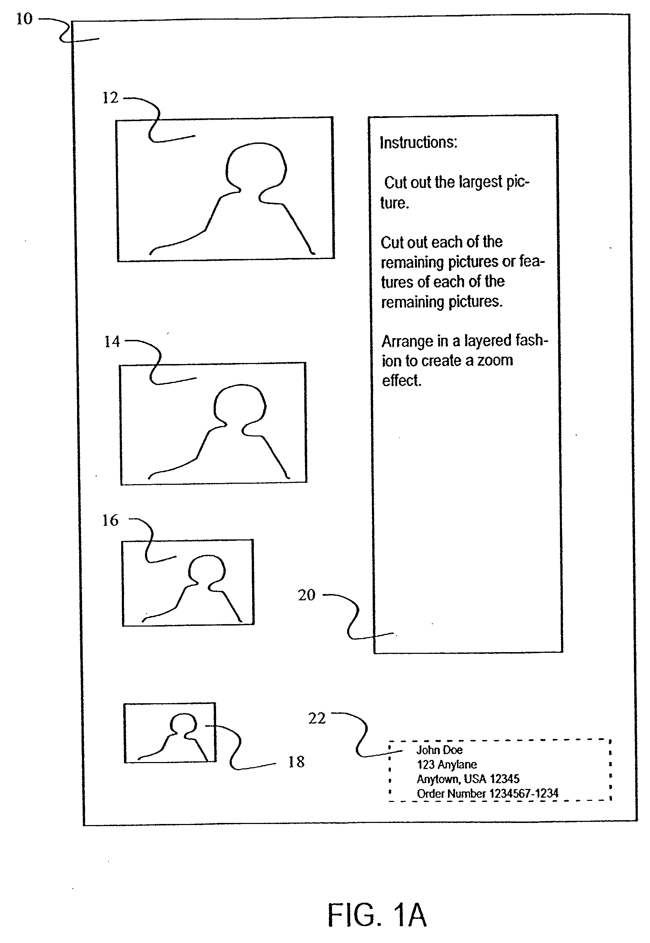

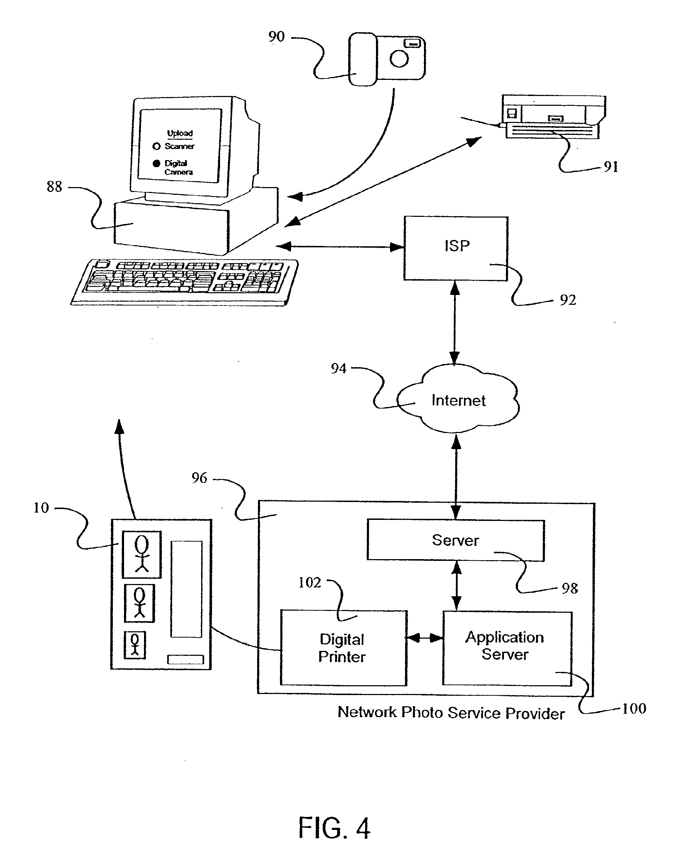

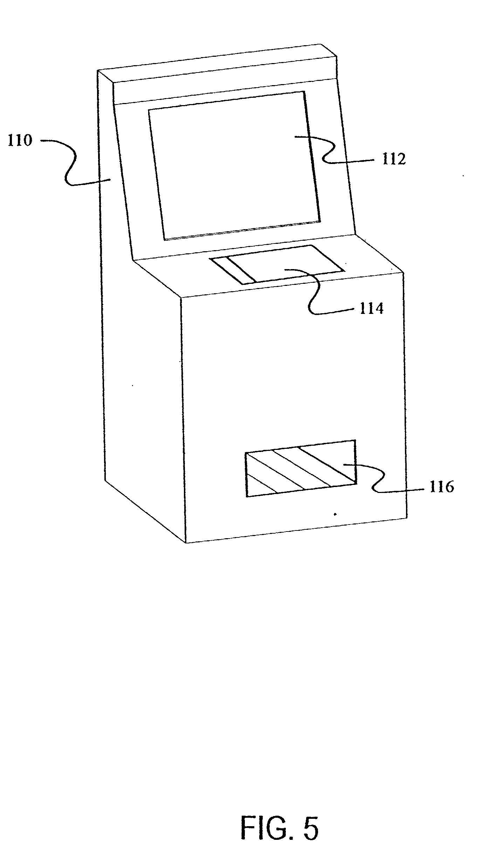

Turning now to FIG. 1A, a composite image product 10 is shown which includes a user supplied visual image 12 (converted from an original digital image), a series of modified visual images 14, 16, 18 derived from an original digital image but having different characteristics than the visual image 12. Instructions 20 and an optional order information block 22 are also provided. In the case where user supplied visual image 12 and modified images 14, 16 and 18 require more physical space on the page, instructions 20 may be provided as an instruction sheet separate from composite image product 10. All of the above visual images are shown provided on a single medium. The composite image product 10 can be produced by the user interacting with a service provider 96 such as depicted in the system shown in FIG. 4. Alternatively, composite picture product 10 can be produced by the user interacting with a picture or visual image making apparatus 110 as shown in FIG. 5 and which will be described in detail in subsequent discussion.

Continuing now with FIG. 1A, the user supplied visual image 12 can, for example, be a color visual image. The user supplied visual image 12 must be a digitized visual image to be transferred to the service provider 96 in a system 104 as depicted in FIG. 4. The modified visual images 14, 16 and 18 represent different characteristics of the user supplied visual image 12 which in FIG. 1A are shown as reduced size copies of the user supplied visual image 12 and preferably have a similar pixel resolution.

Also provided on the composite image product 10 is optional order information block 22 which shows relevant information to identify the user who placed the order for composite image product 10. When composite image product 10 is produced by the service provider 96 (see FIG. 4), order information block 22 is useful and can be provided. When composite image product 10 is produced by the picture or visual image making apparatus 110 (see FIG. 5), order information block 22 is less useful since the user is co-located and is not typically provided.

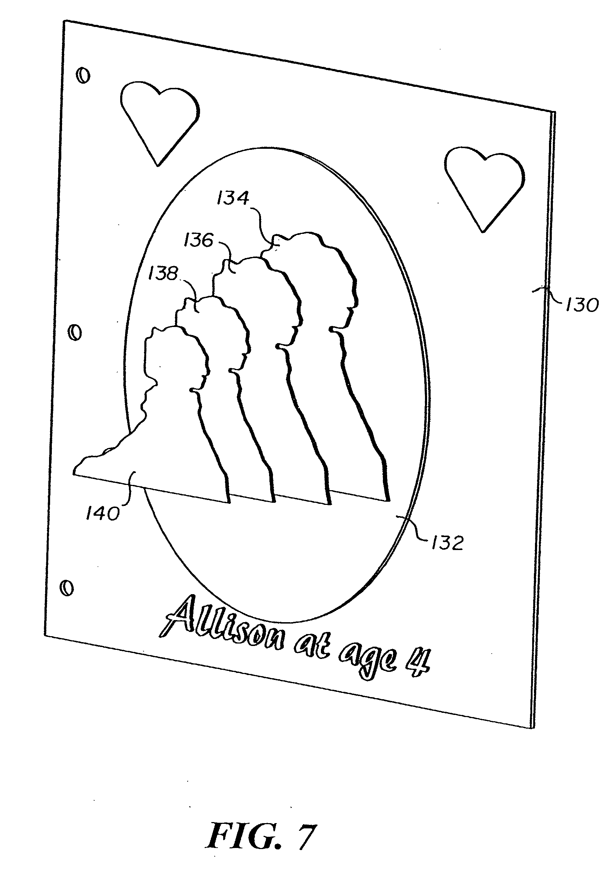

An instruction block 20 is provided to assist the user in disassembling the visual images 12, 14, 16, and 18 from composite image product 10 and reassembling them to form a portion of a scrapbook page. Disassembling can be accomplished with the use of scissors to cut out visual images 12, 14, 16, and 18. The user can cut out the entire visual image or portions of the visual image. In FIG. 7, the series of cut out visual images 134, 136, 138 and 140 assembled on scrapbook page 130 form a layered zoom effect.

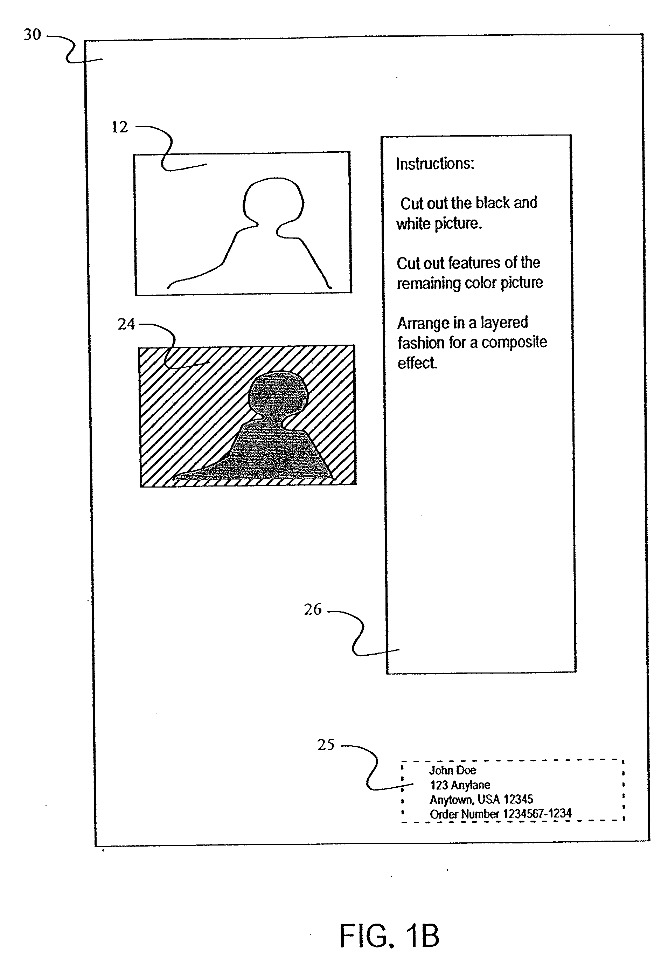

In FIG. 1B, composite image product 30 includes the user supplied visual image 12 and modified visual image 24. Modified visual image 24 is provided with the same size and resolution as user supplied visual image 12, but represents different color characteristics. For example, but not by way of limitation, modified visual image 24 can be a black and white visual image. In a similar fashion, modified visual image 24 can be formed using any number of well-known digital filters to modify the user supplied visual image 12. Such digital filters are commonly found in image editing software such as Adobe Photoshop produced by Adobe Systems Incorporated.

An instruction block 26 is provided to assist the user in disassembling the visual images 12 and 24 from composite image product 30 and reassembling them to form a portion of a scrapbook page. Also optionally provided on the composite image product 30 is order information block 25 which shows relevant information to identify the user who placed the order for composite image product 30.

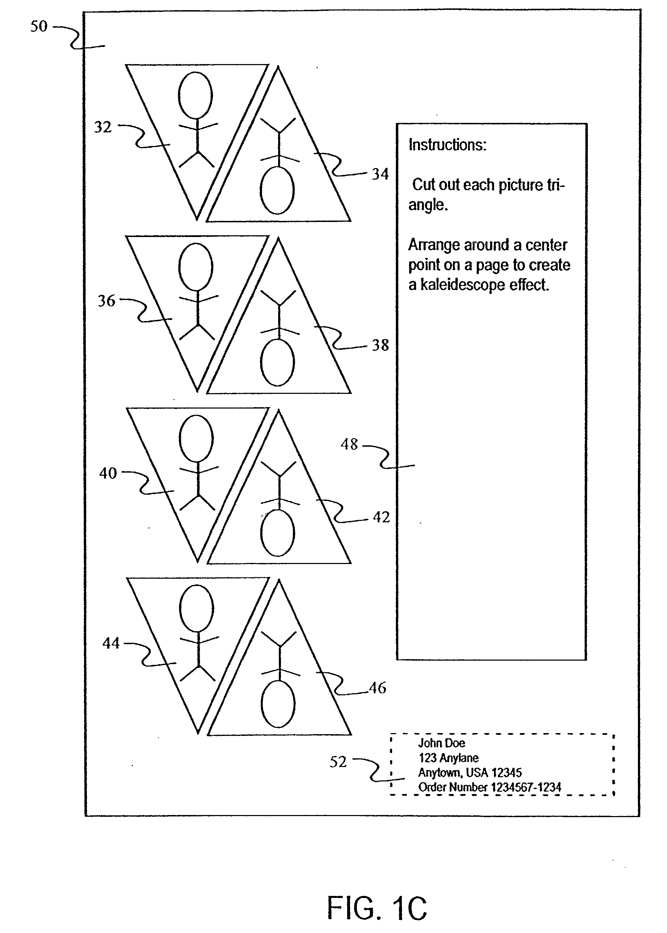

Referring now to FIG. 1C, a composite image product 50 includes a visual image portion 32 of the user supplied visual image 12 and seven additional copies of said visual image portion 32 which are shown as visual image portions 34, 36, 38, 40, 42, 44, and 46. An instruction block 48 is provided to assist the user in disassembling the visual image portions 32, 34, 36, 38, 40, 42, 44, and 46 and reassembling them into a portion of a scrapbook page. Composite image product 50 optionally includes an order information block 52 which shows relevant information to identify the user who placed the order for composite image product 30. Each of the visual image portions shown in FIG 1C (such as 32, 34, 36, 38, 40, 42, 44, 46) are mirrored images.

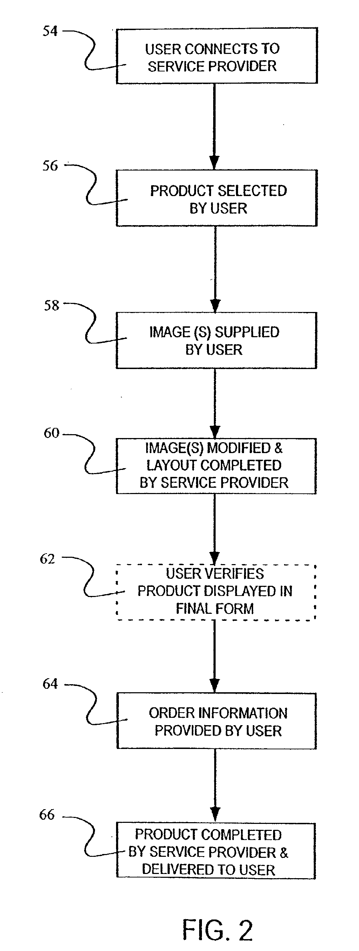

Turning now to FIG. 2, a process is shown by which a user can easily order the composite image product 10 of FIG. 1A. Beginning with block 54, a user connects to a service provider 96 from computer 88 using a communication channel via an Internet Service Provider (ISP) 92 and Internet 94 (see FIG. 4) and selects (block 56) a product of interest such as composite image product 10. The service provider 96 will then prompt the user for the user supplied visual image 12 required for the fulfillment of composite image product 10. In block 58, the user uploads the user supplied visual image 12 to service provider 96. Application server 100 (see FIG. 4) modifies user supplied visual image 12 and computes visual images 14, 16 and 18 (block 60). Before completing the order, the user can optionally view (block 62) the composite image product 10 in its final form before supplying the appropriate user order information (block 64) such as credit card information and address information. Service provider 96 completes the order and causes the composite image product 10 to be delivered (block 66) to the user at the address supplied in block 64.

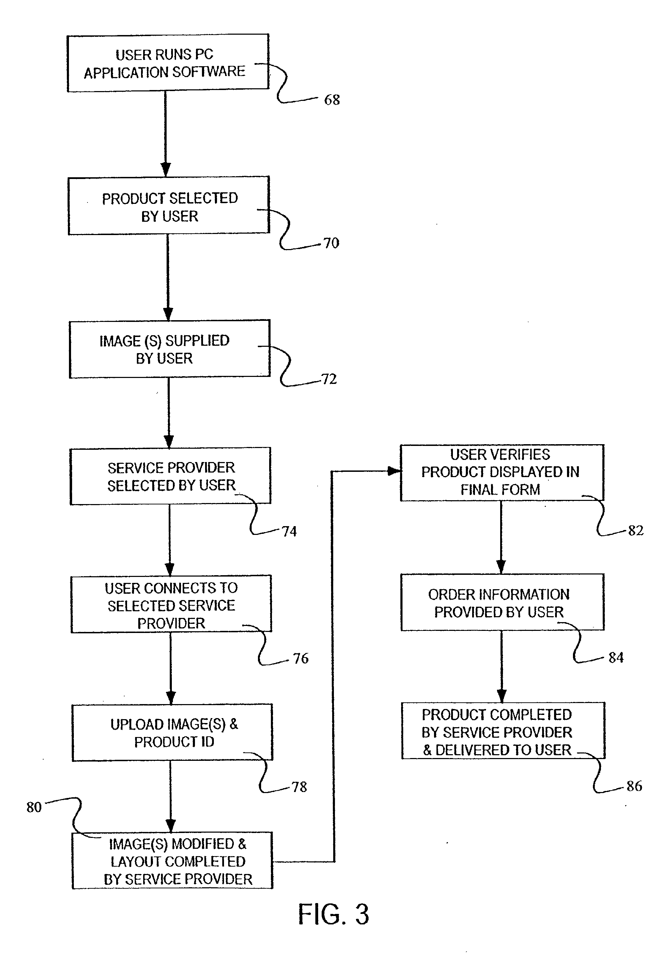

In FIG. 3, an alternative method for providing a user with the composite image product 10 is shown wherein the user only connects to service provider 96 when he or she has settled on a final form of the composite image product 10. To achieve this, the user has been provided with application software that is operable (block 68) with a personal computer 88 (see FIG. 4). The application software permits the user to select (block 70) a product of interest such as the composite image product 10 and prompts the user to supply (block 72) a visual image 12 for completion of the composite image product 10. The user can choose to iterate many times between blocks 70 and 72 before settling on a final form of composite image product 10 or another image product all together. At this point, the application software can provide a list of service providers 96 who provide similar products for the user to select (block 74) from.

Upon selection, the application software connects the user (block 76) to the selected service provider 96 via ISP 92 and Internet 94 whereon the user supplied visual image 12 is uploaded (block 78) to the service provider 96 along with the appropriate product code for identifying the chosen image product. Application server 100 modifies (block 80) the user supplied visual image 12 to compute visual images 14, 16, and 18 according to the requirements of composite image product 10 and presents this final form to the user for verification (block 82). Upon verification, the user supplies order information (block 84) such as credit or debit card information and address information that are necessary for delivery of the product (block 86).

Turning now to FIG. 4, a system 104 is shown which is useful in practicing the present invention as discussed with respect to FIG. 2 and FIG. 3. Personal computer 88 is shown operably connected to a server 98 of service provider 96 via a communication channel including ISP 92 and Internet 94 thus allowing a user to select product options, supply digital images required for the fulfillment of the product options, and supply order information required for the delivery of the completed product. Personal computer 88 is also shown operably connected to a printer 91 through a local channel that can be a cabled or a wireless channel. Printer 91 may be, for example, an inkjet printer, a thermal printer, or a silver halide printer.

An electronic camera 90 is shown operably connected to personal computer 88 and can provide a source of user supplied visual images. Other devices connected to personal computer 88, such as popular flatbed scanners manufactured by the Hewlett-Packard Company, can provide visual images useful in the present invention. Similarly, film images provided on a PictureCD™ manufactured by the Eastman Kodak Co. are another source of visual images, which have been converted to a digital format and are operable in personal computer 88 and useful in the present invention.

Service provider 96 includes server 98 which is responsible for connecting a user to application server 100 and collecting the order information used to complete the order and deliver the selected product. Application server 100 accepts the user supplied digital image and performs the necessary image processing to complete the ordered product such as composite image product 10. Communicating with a digital printer 102 such as a Model 2711 digital minilab manufactured by Noritsu Inc., Application Server 100 causes the digital printer 102 to form the composite image product 10 with user supplied visual image 12 and modified visual images 14, 16, and 18 which is then delivered to the user.

Referring to FIG. 5, the picture or visual image making apparatus 110 can take various forms know in the art. For a specific example, it can be the Picture Maker™ kiosk produced by the Eastman Kodak Company. Picture or visual image making apparatus 110 includes a color display 112 for presenting information to a user and a flatbed scanner 114 for receiving the user supplied visual image 12. Hardcopy egress slot 116 is provided for controlling the delivery of a medium, which includes composite image product 10 to a user.

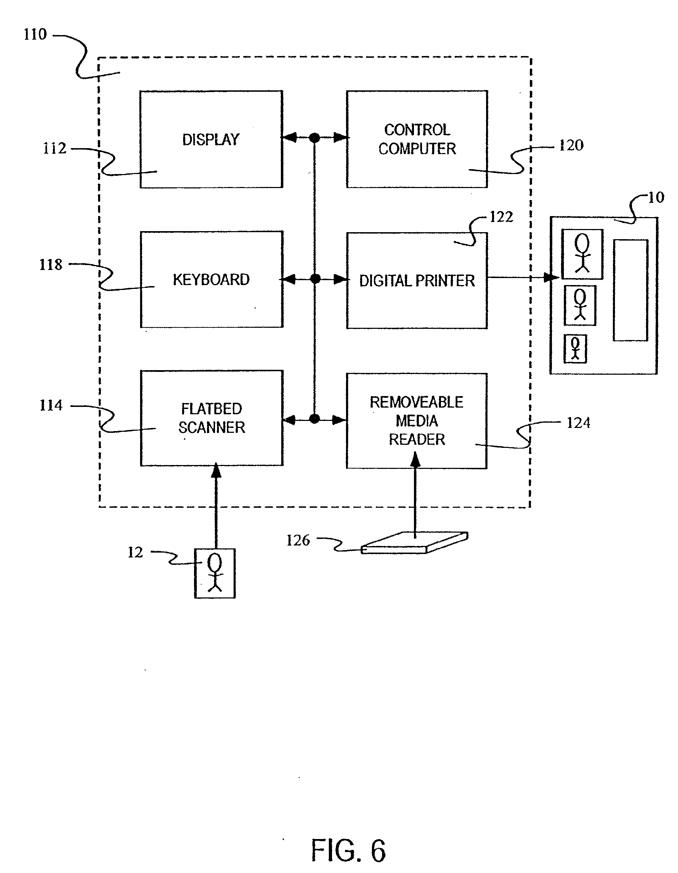

Referring to FIG. 6, a block diagram is shown that depicts the included functions of picture or visual image making apparatus 110 in more detail. Not shown in FIG. 5 is a keyboard 118 for entering information into control computer 120. Control computer 120 typically is a specialized type of personal computer and manages the flow of information and functionality of the components of picture or visual image making apparatus 110. Internal to picture or visual image making apparatus 110 is a digital printer 122 an example of which is the Kodak Digital Science Model 8650 manufactured by the Eastman Kodak Company. The digital printer 122 responds to the commands of control computer 120 for forming the composite image product 10 on a medium such as thermal paper. Another method for receiving the user supplied visual image 12 is illustrated by the inclusion of Removable Media Reader 124. Removable Media Reader 124 receives removable media 126 which can take many forms such as a compact flash card, a floppy disk, a compact disk, a PictureCD™ or many other forms of removable media used in transferring datafiles such as digital images.

Turning now to FIG. 7, a scrapbook page 130 is shown in its completed form. It includes an optional background shape 132 and a series of cut out visual images 134, 136, 138 and 140. Background shape 132 is typically die cut and of a different color and/or texture than scrapbook page 130. However, a user can cut out a background shape 132 with scissors.

Beginning with the composite image product 10 (see FIG. 1A) and a pair of scissors, the user cuts out portions of visual images 12, 14, 16, and 18 to form the series of cut out visual images 134, 136, 138 and 140 in accordance with the instructions set forth in instruction block 20. To complete the scrapbook page 130, background shape 132 is then fixed to scrapbook page 130 using an adhesive compound. In sequence, cut out visual images 134, 136, 138, and 140 are also fixed to scrapbook page 130 using an adhesive compound. At this point, the user is permitted to add text, additional pictures, and/or additional forms of decorative accent to further annotate scrapbook page 130. Completed scrapbook page 130 can then be inserted into a scrapbook (not shown).

Other features of the invention are included below.

A method of arranging a series of at least two visual images of different characteristics of the same image and fixing them to a page which is usable in a scrapbook, comprising the steps of:
a) using a digital image to produce a series of digital images of different characteristics;
b) forming visual images of the series of different characteristics of images on a medium;
c) cutting out the series of different characteristics of visual images from the medium; and
d) fixing the cut out different visual images on the page which can be used in a scrapbook.

The method wherein the characteristics include different sizes, colors, or combinations thereof.

A method of arranging a series of at least two visual images of different sizes of the same image and fixing them to a page which is usable in a scrapbook, comprising the steps of:
a) using a digital image to produce a series of digital images of different sizes;
b) forming visual images of the series of different sizes of images on a medium;
c) cutting out the series of different sizes of visual images from the medium; and
d) fixing the cut out different sizes of visual images on the page which can be used in a scrapbook.

The method wherein the visual images are photographic images, thermal images, or inkjet images.

The method wherein the cut out images are fixed by using an adhesive.

A method of making a scrapbook page, comprising the steps of:
a) making a digital image of a desired subject;
b) forming two or more visual images of the desired subject digital image of different sizes of the same image on a medium to be fixed to a page which can be used in a scrapbook;
c) cutting out the series of images from the medium;
d) fixing the cut out images on the page which can be used in a scrapbook; and
e) annotating the page with other information or pictures and inserting such page into a scrapbook.
method of arranging a series of images taken from a single image to be fixed to a page which is usable in a scrapbook, comprising the steps of:
a) using a digital image of the single image to produce a series of digital images of different characteristics;
b) forming at least one visual image of the series of different characteristics of images on a medium;
c) cutting out the at least one visual image from the medium; and
d) fixing the cut out of at least one visual image on the page which can be used in a scrapbook.

The method wherein the at least one digital image includes a plurality of images of the single image having different characteristics and which are arranged as a single visual image to be cut out from the medium.

The method wherein the visual images are photographic images, thermal images, or inkjet images.

The method wherein the different characteristics include size, color content, or combinations thereof.

The method wherein further including the step of providing other visual images on the scrapbook page either before or after fixing the visual image to the scrapbook page.

A method of arranging a series of images taken from a single image to be fixed to a page which is usable in a scrapbook, comprising the steps of:
a) providing a digital image of a single image;
b) following instructions for producing a series of digital images of a single image having different characteristics;
b) forming at least one visual image of the series of different characteristics of images on a medium;
c) cutting out the at least one visual image from the medium; and
d) fixing the cut out at least one visual image on the page which can be used in a scrapbook.

The instruction sheet wherein the information includes a visual arrangement of images and text.

A method of permitting a user to arrange a series of at least two visual images of different characteristics formed from the same image and fixing them to a page which is usable in a scrapbook, comprising the steps of:
a) the user sending a digital image over a communication channel to a service provider with instructions to the service provider, such service provider using the digital image produces a series of digital images of different characteristics in accordance with the instructions and sends such digital images series to the user;
b) the user using the series of digital images forms visual images of the series of different characteristics of images on a medium;
c) the user cutting out the series of different characteristics of visual images from the medium; and
d) the user fixing the cut out different visual images on the page which can be used in a scrapbook.

The method further including making payment via the channel to the service provider for providing the series of digital images.

The method wherein the channel is a local channel or the Internet.

## Claims

1. A method of providing images and information to a user to permit the arrangement of a series of at least two pictures of different characteristics of the same image and fixing them to a page which is usable in a scrapbook, comprising the steps of:
a) using a digital image to produce a series of digital images of different characteristics;
b) forming visual images of the series of different characteristics of images and instructions on a medium; and
c) printing the visual information and instructions to facilitate a user cutting out the series of different characteristics of visual images from the medium and fixing them to a scrapbook page.

2. An instruction sheet which provides information to a user to practice the method of claim 18.

3. A method of making at least two images which can be used in a scrapbook, comprises:
a) providing at least one portion of at least one digital image provided by a user;
b) modifying the at least one digital image to provide a modified digital image ;
c) providing instructions in a digital format containing information for assembling said at least one user supplied digital image; and
d) producing visual images from the at least one digital image, the modified digital image and the instructions on at least one medium so that the visual images can be assembled in a scrapbook.

4. An image product produced by the method of claim 3.
